# EUROPEAN PATENT APPLICATION

(11) **EP 1 749 617 A1**
(43) Date of publication of application: **07.02.2007**
(21) Application number: 06253551.3
(22) Date of filing: 06.07.2006
(51) Int. Cl.: B23Q 11/00

(54) **Rotating body balancing structure**

(30) Priority: 04.08.2005 JP 2005226965
(71) Applicant: FANUC LTD, Minamitsuru-gun, Yamanashi 401-0597 (JP)
(72) Inventor: Kawai, Tomohiko, Minamitsuru-gun Yamanashi 401-0304 (JP); Ebihara, Kenzo FANUC Dai3virakaramatsu, Minamitsuru-gun Yamanashi 401-0511 (JP); Ooki, Takeshi FANUC Dai3virakaramatsu, Minamitsuru-gun Yamanashi 401-0511 (JP)
(74) Representative: Billington, Lawrence Emlyn

(57) **Abstract**

A plurality of balancing structures are disposed in weight accommodation holes which extend in a radial direction and spaced at equal angles in a rotating plate constituting part of a rotating body on which a rotation object is mounted. A balancing weight having a male thread is disposed in each weight accommodation hole and is screwed into a female thread formed in the accommodation hole. A spring adjoining the weight is compressed by a stopper fixed in the weight accommodation hole at the outer end of the rotating plate. The weight can be turned with a tool inserted through holes provided in the spring and stopper to adjust the radial position of the weight and thereby balance the rotating body.

## Description

### BACKGROUND OF THE INVENTION

### 1. Field of the Invention

The present invention relates to a mechanism for balancing a rotating body such as a spindle of a machine tool.

### 2. Description of the Related Art

An unbalanced rotating body vibrates when it rotates. If the rotating body turns on a rapidly rotating shaft such as the spindle of a machine tool, the unbalance produces adverse effects on the machine and/or the machining process. Particularly in the field of ultra-precise machining, a fine adjustment on the order of several mg-cm is required to balance the spindle. A conventional method of balancing a rotating body is to shave the rotating body or to add a balancing weight to the rotating body.

A problem with the shaving method of balancing is that fine adjustment is difficult, since the weight of the rotating body can be reduced but not increased. This method, therefore, is not well suited for balancing a rotating body on the spindle of a machine tool for ultra-precise machining, where fine adjustment for achieving balance is particularly necessary. Environmental concerns also arise, because there are shaved cuttings to be disposed of.

The method of balancing by adding a weight is also problematic. If clay is used as the weight attached to adjust the balance, then when the rotating body is spun, the clay is deformed by centrifugal force, upsetting the balancing adjustment. The adjustment procedure is also difficult, requiring repeated attachment of a quantity of weight (clay) to the rotating body, measurement of the unbalance, detachment of the weight, and then reattachment. Another drawback of this method is that the locations at which the weight can be attached are limited to the inner side of the rotating body.

If a screw is used as the balancing weight, a female thread for adjustment is conventionally provided on an end face of a rotating body, and by screwing a male thread serving as a balance adjustment weight into the female thread, the rotating body is balanced. A problem with this method is that it requires an assortment of screws of different weights.

The balancing of a rotating body such as a spindle of a machine tool is carried out with a workpiece mounted on an end face of the rotating body, so the workpiece must be shaped so as not to interfere with the balancing adjustment. Sometimes the rotating body cannot be balanced because of the shape of the workpiece.

### SUMMARY OF THE INVENTION

A structure for balancing a rotating body according to the present invention comprises a rotating plate integrally attached to a rotating body, and the rotating plate has a plurality of weight accommodation holes drilled in a radial direction to accommodate weights, weights disposed in the weight accommodation holes, and adjustment means for adjusting the positions of the weights in the radial direction.

The adjusting means may comprise a female thread provided in each weight accommodation hole and a male thread, which screws into the female thread, provided on each weight. The position of the weight in each weight accommodation hole is adjusted by turning the weight.

An elastic member may be disposed outwardly adjacent to each weight in the radial direction of the rotating plate (toward its outer edge) and a stopper may be disposed outwardly adjacent to each elastic member in the radial direction of the rotating plate. The elastic members may be supported by the stoppers and hold the weights in position by urging the weights toward the center of the rotating plate. The position of the weight in each weight accommodation hole can be adjusted by turning the weight by means of an adjusting tool, which is inserted from the edge of the rotating plate through holes extending through the stopper and elastic member.

According to the present invention, stepless balancing can be carried out by moving the balancing weights in the radial direction of a rotating body, which can thereby be balanced easily with very high precision. Consequently, vibration of the rotating body can be consistently reduced. When the rotation object is a workpiece to be machined, high-precision machining can be achieved due to an extremely low level of vibration. Furthermore, the balancing adjustment can be carried out regardless of the shape of the rotation object mounted on the rotating body. When the rotation object is a workpiece to be machined, the design flexibility of the workpiece is increased.

### BRIEF DESCRIPTION OF THE DRAWINGS

These and other objects and features of the present invention will be apparent from the description of the following embodiments with reference to the accompanying drawings.
In the drawings:
FIG. 1 is a partially perspective sectional view of a rotating body to which the balancing structure according to one embodiment of the present invention is applied.
FIG. 2 is a perspective view of the rotating body in FIG.1 with the rotation object detached.
FIG. 3 is a perspective sectional view of the balancing structure shown in FIG. 2.
FIG. 4 illustrates the adjustment of the position of a weight in the balancing structure in FIG. 3.

### DETAILED DESCRIPTION OF THE PREFERRED EMBODIMENTS

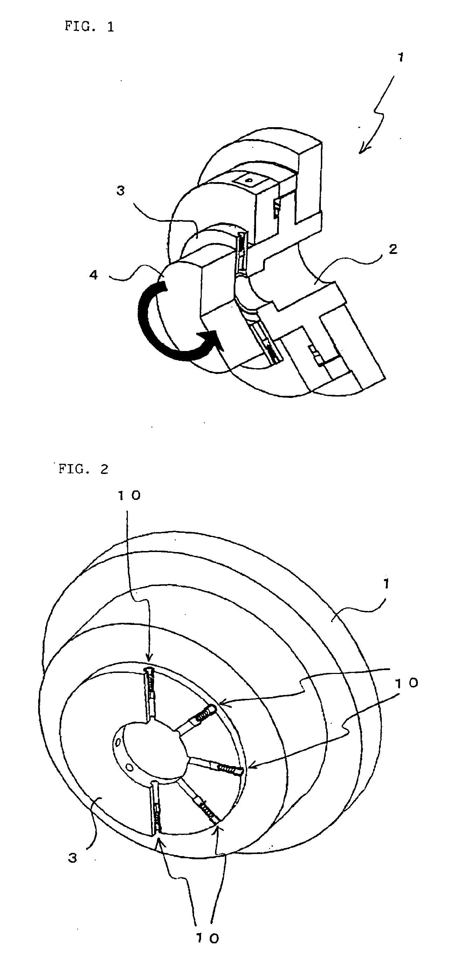

FIG. 1 shows a rotating body 1 to which the balancing structure according to one embodiment of the present invention is applied.

The rotating body 1 is joined to a spindle of a machine tool and has means for mounting a workpiece, by which a workpiece or other rotation object 4 is mounted on the rotating body 1 in a conventional arrangement. FIG. 2 shows the rotating body 1 in FIG.1 with the rotation object 4 detached.

The present invention differs from the conventional spindle arrangement in that a rotating plate 3 is integrated with the rotating body 1 and a plurality of balancing structures 10 are provided in the rotating plate 3, equally spaced around its circumference and oriented in the radial direction.

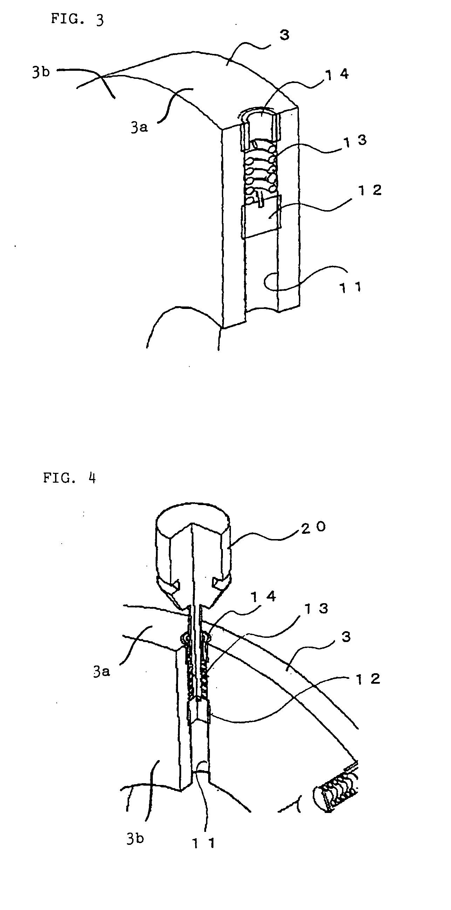

FIG. 3 shows a radial cross-section of one of the balancing structures 10 provided in the rotating plate 3.

The balancing structure 10 comprises a weight accommodation hole 11 drilled in the radial direction (towards the center of the rotating plate 3) from the edge 3a of the rotating plate 3, a balancing weight 12 disposed in the weight accommodation hole 11, an elastic member (spring) 13 for holding the weight in position, and a stopper 14 fixed in the weight accommodation hole 11 at the circumference of the rotating plate 3.

A female thread is formed in the weight accommodation hole 11, and a male thread that screws into the female thread in the weight accommodation hole 11 is formed on the balancing weight 12. The female thread in the weight accommodation hole 11 and the male thread on the balancing weight 12 constitute a balance adjustment means. The elastic member 13 and stopper 14 are each provided with a through hole which extends in the radial direction of the rotating plate 3, at the central portions of the elastic member 13 and stopper 14.

First, the male thread on the balancing weight 12 is screwed into the female thread in the weight accommodation hole 11; then the balancing weight 12 is driven towards the inner end of the weight accommodation hole 11 in the radial direction from the edge 3a of the rotating plate 3 by means of a tool (to be described later). Next, the elastic member 13 is inserted into the weight accommodation hole 11, resting against the weight 12, and finally the stopper 14 is fitted into the weight accommodation hole 11 and secured with an adhesive or the like.

When the elastic member 13 placed between the balancing weight 12 and the stopper 14 is positioned within the adjustable range where the elastic member 13 balances the rotating body 1 in accordance with the accommodation position of the balancing weight 12, the elastic member 13 is compressed and urges the balancing weight 12 towards the center of rotation of the rotating plate 3.

A plurality of balancing structures 10, configured as described above, are disposed in the rotating plate 3, equally spaced around its circumference (at equal angles).

A rotation object 4 such as a workpiece is mounted on the rotating body 1 having the rotating plate 3 in which the plurality of balancing structures 10 are disposed. The rotating body 1 is balanced by adjusting the positions of the balancing weights 12 in the weight accommodation holes 11 of the balancing structures 10 disposed in the rotating plate 3, thereby altering the intensity of the centrifugal force due to the balancing weights 12.

FIG. 4 illustrates the adjustment of the position of a weight 12 in a weight accommodation hole 11 to balance the rotating body 1.

Since each stopper 14 and elastic member 13 have a through hole at their center portions thereof, as shown in FIG. 4, a weight position adjustment tool 20 can be inserted into the through hole. Adjustment of the position of the balancing weights 12 in the weight accommodation holes 11 provided in the radial direction in the rotating plate 3 is achieved by turning the balancing weights 12 with the tip of the tool 20.

The weight position adjustment tool 20 may be a simple screwdriver. If a slot, matching the tip of the screwdriver, is provided on the upper end (the end facing the circumference of the rotating plate 3) of each balancing weight 12, the positions of the balancing weights 12 in the weight accommodation holes 11 can be adjusted by turning each balancing weight 12 with a screwdriver to balance the rotating body.

According to the present invention, as described above, since the positions of the balancing weights 12 in the weight accommodation holes 11 can be adjusted stepless in the radial direction of the rotating plate 3 from the edge 3a of the rotating plate 3, precise balancing of the rotating body 1 is possible and vibration can be reduced more consistently than before.

A rotation object 4 such as a workpiece is mounted on the end face 3b of the rotating plate 3 joined with the rotating body 1, so the edge 3a of the rotating plate 3 is not covered by the rotation object 4. Accordingly, adjusting the positions of the balancing weights 12, i.e., balancing the rotating body 1, can be carried out from the edge 3a of the rotating plate 3. The shape of the rotation object 4 is not constrained by balancing requirements, and the design flexibility of workpieces and the like can be increased.

When the rotating body 1 is rotated, the weights 12 experience a force (centrifugal force) acting in the radial direction, from the center of rotating plate 3 towards the outside. However, since the weights 12 are pushed towards the center of rotating plate 3 by springs 13, they are held in the same positions in respective weight accommodation holes 11. Further, the balancing structure is safe because the stoppers 14 disposed at the outer ends of the weight accommodation holes 11 prevent the weights 12 and springs 13 from being thrown out.

## Claims

1. A structure for balancing a rotating body having means for mounting a rotation object, comprising a rotating plate integrated with said rotating body,
wherein said rotating plate includes a plurality of weight accommodation holes drilled in a radial direction, weights disposed in said weight accommodation holes, and adjusting means for adjusting positions of said weights in the radial direction.

2. The structure for balancing a rotating body according to claim 1,
wherein said adjusting means comprises female threads provided in said weight accommodation holes and male threads provided on said weights, the male threads screwing into the female threads so that when said weights are turned, the positions of said weights in said weight accommodation holes are adjusted.

3. The structure for balancing a rotating body according to claim 2,
further comprising elastic members disposed outwardly adjacent to respective weights in the radial direction of the rotating plate and stoppers disposed outwardly adjacent to respective elastic members in the radial direction of the rotating plate, the elastic members being supported by the stoppers, the elastic members holding the weights in position by urging the weights toward the center of the rotating plate,
wherein the positions of said weights in said weight accommodation holes are adjustable by turning of said weights with an adjustment tool inserted from an edge of the rotating plate through holes provided in said stoppers and said elastic members.

4. The structure for balancing a rotating body according to claim 1,
wherein the rotation object is mounted on one surface of said rotating plate.
